# EUROPÄISCHE PATENTSCHRIFT

(11) **EP 2 653 675 B1**
(45) Veröffentlichungstag und Bekanntmachung des Hinweises auf die Patenterteilung: **31.05.2017**
(21) Anmeldenummer: 13162930.5
(22) Anmeldetag: 09.04.2013
(51) Int. Cl.: F01M 11/03, B01D 27/00, B01D 27/06, B01D 27/10, B01D 35/30

(54) **Ölfilter einer Brennkraftmaschine und Ölfilterelement eines Ölfilters**
Oil filter of a combustion engine and oil filter element of an oil filter
Filtre à huile d'un moteur à combustion interne et élément de filtre à huile d'un filtre à huile

(30) Priorität: 20.04.2012 DE 102012007762
(43) Veröffentlichungstag der Anmeldung: 23.10.2013
(73) Patentinhaber: MANN + HUMMEL GMBH, 71638 Ludwigsburg (DE)
(72) Erfinder: Abokhalaf, Mahdi, 71636 Ludwigsburg (DE); Pflüger, Frank, 74343 Sachsenheim (DE); Luka, Helmut, 71672 Marbach (DE)

(56) Entgegenhaltungen:
- DE-A1- 3 903 675
- DE-A1-102009 049 868
- DE-U1- 20 101 574

## Beschreibung

### Technisches Gebiet

Die Erfindung betrifft einen Ölfilter einer Brennkraftmaschine insbesondere eines Kraftfahrzeugs mit einem Filtergehäuse, welches einen Gehäusetopf, einen mit diesem trennbar verbundenen Gehäusedeckel, wenigstens einen Öleinlass und wenigstens einen Ölauslass aufweist und in dem ein austauschbares Ölfilterelement so angeordnet ist, dass es den wenigstens einen Öleinlass von dem wenigstens einen Ölauslass trennt, und das Ölfilterelement ein Filtermedium umfasst, das einen Innenraum des Ölfilterelements umfangsmäßig geschlossen umgibt und das wenigstens an einer deckelseitigen Stirnseite mit einem Endkörper dicht verbunden ist, und eine Mehrzahl von Stützelementabschnitten zwischen dem Filtermedium und einer Innenseite des Gehäusedeckels angeordnet ist.

Ferner betrifft die Erfindung ein Ölfilterelement eines Ölfilters einer Brennkraftmaschine insbesondere eines Kraftfahrzeugs, welches austauschbar in einem Filtergehäuse mit wenigstens einem Öleinlass und wenigstens einem Ölauslass, welches einen Gehäusetopf und einen mit diesem trennbar verbundenen Gehäusedeckel aufweist, so angeordnet werden kann, dass es den wenigstens einen Öleinlass von dem wenigstens einen Ölauslass trennt, und das ein Filtermedium umfasst, das einen Innenraum des Ölfilterelements umfangsmäßig geschlossen umgibt und das wenigstens an einer deckelseitigen Stirnseite mit einem Endkörper dicht verbunden ist.

### Stand der Technik

Aus der DE 20 2005 002 955 U1 ist ein Ölfilter einer Brennkraftmaschine mit einem oberseitig offenen, durch einen Schraubdeckel verschlossenen Gehäuse bekannt. Im Inneren des Gehäuses ist ein Filtereinsatz zur Reinigung von Schmieröl angeordnet. Durch einen Teil des Filtergehäuses verlaufen ein Einlasskanal für das zu reinigende Schmieröl und ein Auslasskanal für das gefilterte Schmieröl. Der Filtereinsatz besitzt einen sternförmig gefalteten Filterstoffkörper, der oberseitig und unterseitig durch eine obere Stirnscheibe und eine untere Stirnscheibe eingefasst ist. Die obere Stirnseite besitzt an ihrer Oberseite einen konzentrischen Kranz von axial nach oben vorstehenden, zungenförmigen Rastelementen, die einstückig mit der Stirnscheibe ausgebildet sind. Mittels dieser Rastelemente ist der Filtereinsatz lösbar mit dem Schraubdeckel so verbunden, dass bei einem Losdrehen des Schraubdeckels dieser den Filtereinsatz in Axialrichtung mit nach oben nimmt. An der Innenseite des Schraubdeckels ist eine Mehrzahl von Stützelementen angeordnet. Im Betrieb des Filters strömt die zu reinigende Flüssigkeit vom Einlasskanal kommend in Radialrichtung von außen nach innen durch den Filtereinsatz und aus dem Innenraum des Filtereinsatzes axial nach unten durch den Auslasskanal ab. Bei tiefen Temperaturen kann das Schmieröl eine hohe Viskosität aufweisen. Dies kann zu einer Zunahme einer Druckdifferenz zwischen der Rohseite des Filtereinsatzes, radial außen, und der Reinseite, im Innenraum des Filtereinsatzes, führen. Eine mechanische Belastung des Filterstoffkörpers durch die Druckdifferenz kann zum Kollabieren und zur Beschädigung des Filtereinsatzes führen.

Ferner ist aus der DE 201 01 574 A1 ein Flüssigkeitsfilter bekannt, dessen Filterelement eine Entlüftungseinrichtung aufweist, die eine Bohrung hat, die die Rohseite mit einer Rücklaufleitung verbindet. Die Bohrung liegt insbesondere in einem Bauteil vor, das die Rein-/Rohabdichtung übernimmt, beispielsweise in der oberen Endscheibe. Die dort vorgesehene Öffnung dient somit der Androsselung eines Entlüftungsvolumenstroms und nicht dem Leiten eines Bypassvolumenstroms infolge Überschreitung eines vorbestimmten Differenzdrucks zwischen Rein- und Rohseite.

Der Erfindung liegt die Aufgabe zugrunde, einen Ölfilter und ein Ölfilterelement der eingangs genannten Art zu gestalten, bei denen ein Differenzdruck zwischen der Rohseite und der Reinseite des Filtermediums begrenzt werden kann.

### Offenbarung der Erfindung

Diese Aufgabe wird erfindungsgemäß dadurch gelöst, dass eine Bypassleitung mit einem Umgehungsventil zur Umgehung des Ölfilterelements einen radial äußeren Ringraum, der zwischen der radial äußeren Umfangsseite des Filtermediums und einer radial inneren Umfangsseite des Filtergehäuses angeordnet ist, über eine Bypassöffnung in dem deckelseitigen Endkörper mit dem Innenraum des Ölfilterelements verbindet, die Stützelementabschnitte am deckelseitige Endkörper angeordnet sind und in Umfangsrichtung benachbarte Stützelementabschnitte wenigstens einen Strömungskanal der Bypassleitung begrenzen.

Erfindungsgemäß ist also eine Bypassleitung vorgesehen, mit der das Filtermedium strömungstechnisch umgangen werden kann. In der Bypassleitung ist ein Umgehungsventil angeordnet, mit dem ein Grenz-Differenzdruck zwischen der Rohseite und der Reinseite, ab welchem die Bypassleitung geöffnet werden soll, vorgegeben ist. Bei Überschreitung des Grenz-Differenzdrucks öffnet das Umgehungsventil und gibt die Bypassleitung frei. Das Öl fließt dann durch die Bypassleitung an dem Filtermedium vorbei vom Einlass zum Auslass. Der Differenzdruck zwischen Reinseite und Rohseite wird so abgebaut und das Filtermedium vor Beschädigung geschützt. Die Bypassleitung führt von dem Ringraum, welcher das Filtermedium umgibt, durch den wenigstens einen Strömungskanal im deckelseitigen Endkörper und die Bypassöffnung im deckelseitigen Endkörper in den Innenraum des Ölfilterelements. Das Filtermedium kann von dem zu reinigenden Öl unter normalen Bedingungen bei geschlossener Bypassleitung von radial außen nach innen oder von radial innen nach außen durchströmt werden. Zwischen der Innenseite des Gehäusedeckels und dem deckelseitigen Endkörper kann ein Verbindungskanal oder ein Verbindungsraum gebildet sein, welcher den wenigstens einen Strömungskanal indirekt mit der deckelseitigen Bypassöffnung verbindet. Der wenigstens eine Strömungskanal kann aber auch direkt in die deckelseitige Bypassöffnung münden. Der wenigstens eine Strömungskanal kann einer aus einer Mehrzahl von Strömungskanälen der Bypassleitung sein. Somit kann vorteilhafterweise auch eine Mehrzahl von Strömungskanälen jeweils durch umfangsmäßig benachbarte Stützelementabschnitte begrenzt werden. Bei den Stützelementabschnitten kann es sich um Abschnitte von separaten Stützelementen handeln. Die Stützelementabschnitte können aber auch zu einem einzigen Stützelement gehören. Insbesondere kann das Stützelement umfangsmäßig in der Art eines offenen Ringes verlaufen, wobei die Öffnung des Rings den einen Strömungskanal bildet. Vorteilhafterweise können die Stützelementabschnitte und der wenigstens eine Strömungskanal auch Teile eines Adapterelements sein, welches zwischen dem deckelseitigen Endkörper und der Innenseite des Gehäusedeckels angeordnet werden kann. Das Adapterelement kann mit dem deckelseitigen Endkörper oder dem Gehäusedeckel verbunden sein.

Das Ölfilterelement kann koaxial zu einer Montageachse des Gehäusetopfs mit dem Gehäusedeckel austauschbar in das Filtergehäuse eingesteckt sein. Dreh- und/oder Steckbewegungen des Gehäusedeckels relativ zum Gehäusetopf beim Schließen oder Öffnen des Gehäuses werden um die Montageachse und/oder axial zu dieser durchgeführt. Das Ölfilterelement kann auf ein Mittelrohr aufgesteckt sein. Das Mittelrohr kann fest mit dem Gehäusedeckel oder dem Gehäusetopf verbunden sein. Durch das Mittelrohr kann die Position des Ölfilterelements im Filtergehäuse in radialer Richtung vorgegeben werden. Mit den Stützelementabschnitten kann die Position des Ölfilterelements in axialer Richtung relativ zu dem Gehäusedeckel im Filtergehäuse vorgegeben werden. Ferner kann das Ölfilterelement mit den Stützelementabschnitten in axialer Richtung gegen den Boden des Gehäusetopfs verspannt werden.

Vorzugsweise kann am Boden des Gehäusetopfs der Innenraum des Ölfilterelements mit dem Ölauslass oder dem Öleinlass verbunden sein. Die Verbindung kann eine Dichtungseinrichtung aufweisen. Durch die Verspannung mittels der Stützelementabschnitte kann die Dichtungswirkung dieser Dichtungseinrichtung verbessert werden.

Der wenigstens eine Strömungskanal im Endkörper kann eine Strömung des Öls zwischen dem Ringraum und der Bypassöffnung verbessern. So kann das Öl bei offenem Umgehungsventil optimal insbesondere mit geringem Druckverlust durch die Bypassleitung strömen.

Der wenigstens eine Strömungskanal kann strömungstechnisch optimiert sein. Die Stützelementabschnitte und der wenigstens eine Strömungskanal können einfach am Endkörper angeordnet werden. Die Stützelementabschnitte können zusätzlich zu ihrer Stützfunktion auch die Form, den Verlauf und/oder die Größe des wenigstens einen Strömungskanals vorgegeben. Zusätzliche, die Strömung des Öls beeinflussende Strömungselement, sind nicht erforderlich.

Das Filtermedium kann vorteilhafterweise sternförmig gefaltet sein, wodurch einfach eine im Verhältnis zu den Außenmaßen des Filtermediums große aktive Filterfläche realisiert werden kann. Vorteilhafterweise kann das Filtermedium in koaxialer Form realisiert sein, so dass ein gedachter Innenmantel, welcher die radial innere Umfangsseite des Filtermediums definiert, koaxial zu einem gedachten Außenmantel, welcher die radial äußere Umfangsseite des Filtermediums definiert, verläuft. Auf diese Weise kann das Verhältnis zwischen der aktiven Filteroberfläche und den Außenmaßen des Filtermediums weiter verbessert werden.

Bei einer vorteilhaften Ausführungsform können die Stützelementabschnitte sich bezüglich dem Filtermedium von radial außen von dem radial äußeren Ringraum nach radial innen erstrecken. Die Breiten der Stützelementabschnitte in Umfangsrichtung können größer oder kleiner sein als deren Längen von radial außen nach radial innen. Mit den Stützelementabschnitten können so entsprechend große und ausgedehnte Anlageflächen des Endkörpers an dem Gehäusedeckel erreicht werden. Die Stützelementabschnitte können sich bis zum Zentrum des Endkörpers erstrecken. Sie können sich aber auch radial betrachtet zwischen dem äußeren Ringraum und dem Zentrum des Endkörpers enden.

Vorteilhafterweise kann der wenigstens eine Strömungskanal in der dem Filtermedium abgewandten Außenseite des Endkörpers angeordnet sein. Auf diese Weise kann auf eine separate Abdichtung des wenigstens einen Strömungskanals zum Filtermedium hin verzichtet werden.

Ferner kann vorteilhafterweise der wenigstens eine Strömungskanal sich von radial außen von dem radial äußeren Ringraum, mit diesem verbunden, nach radial innen erstrecken. Der wenigstens eine Strömungskanal kann so einfach den radial äußeren Ringraum mit einem radial weiter innen gelegenen Raum der Bypassleitung verbinden. Bei einer weiteren vorteilhaften Ausführungsform kann der Endkörper eine sogenannte Folienendscheibe sein. Folienendscheiben sind im Stand der Technik bekannt. Hinsichtlich der Beschaffenheit der Folienendscheibe wird auf die EP 0 713 721 A1 verwiesen. Insbesondere ist die Folienendscheibe aus einer elastischen Ausgangsmasse hergestellt, welche an dem Filtermedium angeordnet wird und durch Aufschmelzen und Aufschäumen mit dem Filtermedium dichtend verbunden wird. Im Speziellen weist diese elastische Masse eine Mischung aus Nitrilkautschuk und Phenolharz, vorzugweise mit einem Verhältnis im Bereich von 1:0,8 bis 1:1,5, auf. Die Folienendscheibe kennzeichnet sich aufgrund der elastischen, aber festen Ausgangsmasse durch fertigungstechnische Vorteile auf. Außerdem weist die (fertiggestellte) Folienendscheibe dank einer erheblichen Restelastizität durch gute Dichtungseigenschaften auf.

Der wenigstens eine Strömungskanal kann vorzugsweise eine Nut in der dem Filtermedium abgewandten Außenseite der Folienendscheibe und die Stützelementabschnitte können Vorsprünge der Folienendscheibe neben der Nut sein. Die Folienendscheibe kann vorteilhafterweise auf die Stirnseite des Filtermediums aufgeschäumt bzw. aufgeschmolzen sein. Sind mehrere Strömungskanäle in Form von Nuten vorgesehen, so können die Stützelemente Vorsprünge der Folienendscheibe zwischen den Nuten sein.

Der Endkörper kann aber auch eine Kunststoffendscheibe sein, welche nach einem Schweißverfahren mit dem Filtermedium verbunden ist. Die Endscheibe kann auch aus einem PUR (Polyurethan)-Schaum sein. Nuten können einfach insbesondere nach einem Form-, Spritz- oder Gussverfahren in die Endscheibe eingebracht werden. Die Nuten können auch nach einem abtragenden Verfahren, insbesondere mittels Fräsen oder einem Ätzverfahren, realisiert sein.

Bei einer weiteren vorteilhaften Ausführungsform kann eine Mehrzahl von Strömungskanälen umfangsmäßig vorzugsweise gleichmäßig an der dem Filtermedium abgewandten Außenseite des Endkörpers verteilt sein. Dies hat den Vorteil, dass der Ringraum entlang des gesamten Umfangs des Endkörpers mit Strömungskanälen verbunden ist. Auf diese Weise kann eine Strömung des Öls durch die Bypassleitung, insbesondere eine Anströmung des Umgehungsventils, verbessert werden. Auf diese Weise wird ein Ausgleich des Differenzdrucks zwischen der Rohseite und der Reinseite des Filterelements mittels der Bypassleitung verbessert. Vorteilhafterweise können die Strömungskanäle gleich sein. Somit kann die Gleichmäßigkeit der Strömung des Öls durch die Bypassleitung weiter verbessert werden.

Vorteilhafterweise kann sich der wenigstens eine Strömungskanal in radialer Richtung erstrecken. Auf diese Weise kann wenigstens ein kurzer Strömungskanal und wenigstens ein kurzer Strömungsweg realisiert werden. Kurze Strömungskanäle können einfach und platzsparend realisiert werden. Ferner wirken sich kurze Strömungskanäle positiv auf den Strömungsverlauf aus. Insbesondere kann die Strömung weiter beruhigt werden.

Ferner kann vorteilhafterweise ein Strömungsquerschnitt, insbesondere eine axiale Tiefe, des wenigstens einen Strömungskanals nach radial innen hin abnehmen. Auf diese Weise kann die Strömung in dem wenigstens einen Strömungskanal verbessert werden. Insbesondere kann die Strömung weiter beruhigt werden.

Bei einer weiteren vorteilhaften Ausführungsform können der Endkörper und die Innenseite des Gehäusedeckels einen stirnseitigen Bypassraum begrenzen, der mit dem wenigstens einen Strömungskanal und der Bypassöffnung verbunden sein kann. Der Bypassraum kann ein Ausgleichsvolumen bilden. Er kann zur weiteren Beruhigung der Strömung beitragen. Mit dem Ausgleichsvolumen kann die Öffnungs- und Schließcharakteristik des Umgehungsventils verbessert werden. Insbesondere kann so bewirkt werden, dass das Umgehungsventil gleichmäßiger geöffnet und geschlossen werden kann. Außerdem kann die Strömung des Öls durch die Bypassleitung mittels dem Bypassraum weiter beruhigt werden.

Vorteilhafterweise kann an der dem Endkörper zugewandten Innenseite des Gehäusedeckels wenigstens ein Gegenstützkörper, insbesondere ein umlaufender Steg, angeordnet sein, an dem sich die Stützelementabschnitte des Endkörpers abstützen können. Der Gegenstützkörper kann einen definierten Anschlag für die Stützelemente des Endkörpers bilden. Ein umlaufender Steg hat den Vorteil, dass beim Einbau des Ölfilterelements nicht auf die Orientierung der Stützelementabschnitte gegenüber dem Gegenstützkörper geachtet werden muss. Ein umlaufender Steg kann darüber hinaus einfach im Gehäusedeckel realisiert werden. Vorteilhafterweise kann die Ausdehnung des Steges in radialer Richtung wenigstens zwischen etwa 1 % bis 10 % eines Außendurchmessers eines Außenmantels des Filtermediums betragen, welcher die radial äußere Umfangsseite des Filtermediums definiert. Auf diese Weise bietet der Steg eine entsprechend große Anlagefläche für die Stützelementabschnitte. Dies wirkt sich positiv auf die Stützwirkung aus. Insbesondere bei Verwendung eines weichen deckelseitigen Endkörpers, insbesondere einer Folienendscheibe, ist eine großflächige Stützwirkung von großem Vorteil. Vorteilhafterweise können die Ausdehnungen der Stützelementabschnitte in radialer Richtung wenigstens so groß sein wie die Ausdehnung des Steges in radialer Richtung. Auf diese Weise kann die Anlagefläche vergrößert und damit die Stützwirkung weiter verbessert werden.

Bei einer weiteren vorteilhaften Ausführungsform kann das Umgehungsventil im Innenraum des Ölfilterelements angeordnet sein. Auf diese Weise kann das Umgehungsventil platzsparend untergebracht werden. Das Umgehungsventil kann fest mit dem Ölfilterelement verbunden sein. Alternativ kann es auch fest mit dem Filtergehäuse, insbesondere in einem Mittelrohr am Deckel oder am Gehäusetopf, angeordnet sein.

Ferner wird die Aufgabe erfindungsgemäß mit dem Ölfilterelement dadurch gelöst, dass der Endkörper eine Bypassöffnung zu einem Innenraum des Ölfilterelements aufweist, am Endkörper eine Mehrzahl von Stützelementabschnitten angeordnet ist zur Abstützung gegen eine Innenseite des Gehäusedeckels und in Umfangsrichtung benachbarte Stützelementabschnitte wenigstens einen Strömungskanal einer Bypassleitung begrenzen. Die oben in Verbindung mit dem erfindungsgemäßen Ölfilter aufgezeigten Merkmale und Vorteile gelten für das erfindungsgemäße Ölfilterelement und dessen vorteilhafte Ausgestaltungen entsprechend.

Bei einer vorteilhaften Ausführungsform kann das Ölfilterelement koaxial zu einer Montageachse eines Gehäusedeckels mit einem Gehäusetopf in dem Filtergehäuse angeordnet werden. Das Filtermedium kann vorteilhafterweise sternförmig gefaltet sein. Vorteilhafterweise kann es eine koaxiale Form aufweisen. Ferner können vorteilhafterweise die Stützelementabschnitte sich bezüglich dem Filtermedium von radial außen von dem radial äußeren Ringraum nach radial innen erstrecken. Vorteilhafterweise können die Strömungskanäle in der dem Filtermedium abgewandten Außenseite des Endkörpers angeordnet sein. Des weiteren kann vorteilhafterweise der wenigstens eine Strömungskanal sich von radial außen von dem radial äußeren Ringraum, mit diesem verbunden, nach radial innen erstrecken. Es können auch mehrere Strömungskanäle vorgesehen sein, die jeweils mit benachbarten Stützelementabschnitten begrenzt werden. Bei den Stützelementabschnitten kann es sich um Abschnitte von separaten Stützelementen handeln. Die Stützelementabschnitte können aber auch zu einem einzigen Stützelement gehören. Insbesondere kann das Stützelement umfangsmäßig in der Art eines offenen Ringes verlaufen, wobei die Öffnung des Rings den einen Strömungskanal bildet.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden.

Es zeigen schematisch
- Figur 1: einen Längsschnitt eines Ölfilters für Motoröl einer Brennkraftmaschine eines Kraftfahrzeuges mit einem austauschbaren Filterelement und einer Bypassleitung mit einem Umgehungsventil;
- Figur 2: eine isometrische Darstellung des Filterelements aus der Figur 1 in einem im Teilschnitt gezeigten Gehäusedeckel;
- Figur 3: eine Draufsicht auf eine deckelseitige Endscheibe des Filterelements aus den Figuren 1 und 2;
- Figur 4: eine isometrische Darstellung eines alternativen Filterelements, welches ähnlich ist zu dem Filterelement aus den Figuren 1 bis 3;
- Figur 5: eine Draufsicht auf die deckelseitige Endscheibe des Filterelements aus der Figur 4.

In den Figuren sind gleiche Bauteile mit gleichen Bezugszeichen versehen.

### Ausführungsform(en) der Erfindung

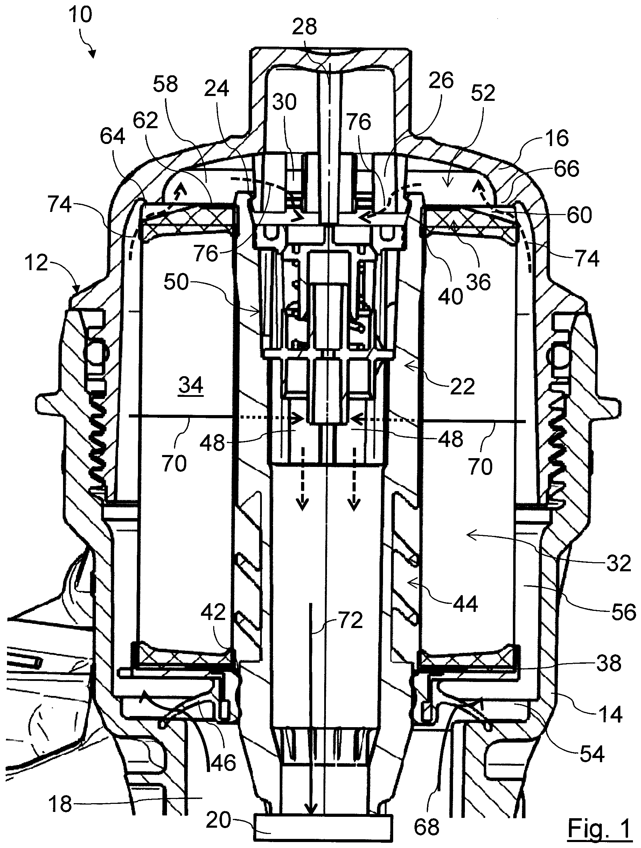

In der Figur 1 ist ein Ölfilter 10 für Motoröl eines Ölkreislaufs einer ansonsten nicht gezeigten Brennkraftmaschine eines Kraftfahrzeugs gezeigt. Der Ölfilter 10 umfasst ein Filtergehäuse 12, welches einen Gehäusetopf 14 und einen Gehäusedeckel 16 aufweist. Der Gehäusetopf 14 ist fest mit der Brennkraftmaschine verbunden. Der Gehäusedeckel 16 ist zum Verschließen des Filtergehäuses 12 in die offene Seite des Gehäusetopfs 14 eingeschraubt. Der Gehäusetopf 14 ist aus einer Aluminiumdruckgusslegierung. Der Gehäusedeckel 16 ist aus einem Kunststoff.

Durch einen Boden des Gehäusetopfs 14 führt ein Öleinlass 18 für zu filtrierendes Motoröl in das Filtergehäuse 12. Der Öleinlass 18 ist außerhalb des Filtergehäuses 12 mit einer nicht gezeigten Ölzufuhrleitung des Ölkreislaufs verbunden. Ein in der Figur 1 lediglich angedeuteter Ölauslass 20 führt aus dem Filtergehäuse 12 heraus und ist außerhalb des Filtergehäuses 12 mit einer Ölrückführleitung des Ölkreislaufs verbunden. Im Filtergehäuse 12 ist ein Mittelrohr 22 angeordnet, das mit einem offenen Ende, in der Figur 1 unten, dicht mit dem Ölauslass 20 verbunden ist. Das dem Ölauslass 20 abgewandte Ende des Mittelrohrs 22, in der Figur 1 oben, weist an seiner radial inneren Umfangsseite einen umlaufenden Raststeg 24 auf. Hinter dem Raststeg 24 verrastet eine Mehrzahl von Rasthaken 26, welche einstückig an der Innenseite des Gehäusedeckels 16 angeordnet sind. Das Mittelrohr 22 ist mittels der Rasthaken 26 und dem Raststeg 24 lösbar an dem Gehäusedeckel 16 fixiert. Das Mittelrohr 22 erstreckt sich koaxial zu einer Montageachse 28 des Filtergehäuses 12. Um die Montageachse 28 wird der Gehäusedeckel 16 beim Einschrauben und Herausschrauben relativ zu dem Gehäusetopf 14 gedreht. Die Innenseite des insgesamt becherförmigen Gehäusedeckels 16 ist kuppelartig gewölbt. Zwischen den Rasthaken 26 befinden sich Durchflussöffnungen 30.

In dem Filtergehäuse 12 ist ein austauschbares Filterelement 32 koaxial zur Montageachse 28 angeordnet. Das Filterelement 32 umfasst ein sternförmig gefaltetes Filtermedium 34 in koaxialer Form, bei dem ein gedachter innerer Umfangsmantel, welcher die radial innere Umfangsseite des Filtermediums 34 definiert, zu einem gedachten äußeren Umfangsmantel, welcher die radial äußere Umfangsseite des Filtermediums 34 definiert, koaxial ist. An der dem Gehäusedeckel 16 zugewandten Stirnseite des Filtermediums 34 ist eine flache deckelseitige Endscheibe 36 in Form einer Folienendscheibe dicht angebracht. Alternativ könnte die Endscheibe 16 aus Kunststoff gebildet sein, insbesondere als Spritzgussteil.

An der dem Gehäusedeckel 16 abgewandten Stirnseite des Filtermediums 34 ist eine flache anschlussseitige Endscheibe 38 aus Kunststoff dicht angeklebt. Die deckelseitige Endscheibe 36 verfügt über eine deckelseitige Durchstichöffnung 40 für das Mittelrohr 22. Die anschlussseitige Endscheibe 38 verfügt über eine entsprechende anschlussseitige Durchstichöffnung 42 für das Mittelrohr 22. Das Filterelement 32 ist auf das Mittelrohr 22 aufgesteckt. Das Mittelrohr 22 durchquert einen koaxialen Innenraum 44 des Filterelements 32. Das Filtermedium 34 umgibt den Innenraum 44 umfangsmäßig geschlossen.

An der dem Filtermedium 34 abgewandten Außenseite der anschlussseitigen Endscheibe 38 ist koaxial zur anschlussseitigen Durchstichöffnung 42 eine ringförmige Rücklaufsperrmembran 46 befestigt, welche mit ihrer radial inneren Umfangsseite gegen einen fluidundurchlässigen Bereich der Umfangsseite des Mittelrohrs 22 abdichtet. Ein radial äußerer Rand der Rücklaufsperrmembran 46 liegt im druckfreien Zustand und solange der Öldruck im Öleinlass 18 geringer ist als im Inneren des Filtergehäuses 12, wie in der Figur 1 gezeigt, an einer entsprechenden Dichtfläche am Boden des Gehäusetopfs 14 an, die den Öleinlass 18 umlaufend umgibt.

Ein Abschnitt des Mittelrohrs 22, der sich im Innenraum 44 des Filterelements 32 befindet, weist eine Mehrzahl von Durchflussöffnungen 48 auf. Im Bereich des Endes, das dem Gehäusedeckel 16 zugewandt ist, ist im Mittelrohr 22 ein Umgehungsventil 50 einer insgesamt mit 52 bezeichneten Bypassleitung für das Motoröl angeordnet.

Zwischen der anschlussseitigen Endscheibe 38 und dem Boden des Gehäusetopfs 14 befindet sich ein Einlassraum 54. Der Einlassraum 54 geht in einen Ringraum 56 über, der das Filtermedium 34 radial außen umgibt. Zwischen der deckelseitigen Endscheibe 36 und der Innenseite des Gehäusedeckels 16 befindet sich ein Bypassraum 58, welcher ebenfalls Teil der Bypassleitung 52 ist.

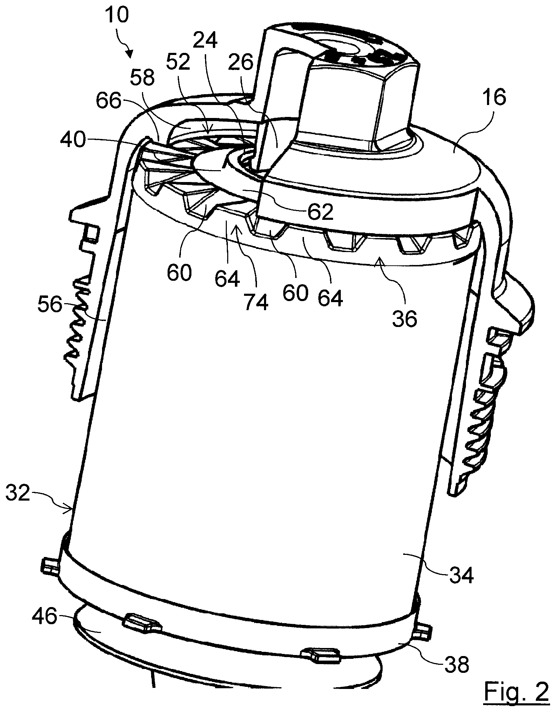

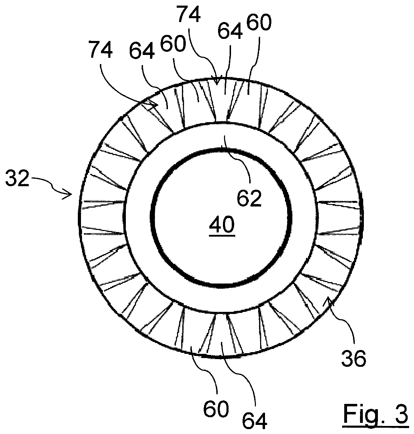

Auf ihrer dem Filtermedium 34 abgewandten Außenseite weist die deckelseitige Endscheibe 36 eine Mehrzahl von Strömungskanälen 60 auf, welche in den Figuren 2 und 3 im Detail gezeigt sind und ebenfalls zur Bypassleitung 52 gehören. Die Strömungskanäle 60 sind als Nuten mit U-förmigem Profil in der deckelseitigen Endscheibe 36 realisiert, die auf ihren dem Filtermedium 34 abgewandten Seiten zum Bypassraum 58 hin offen sind. Die Strömungskanäle 60 erstrecken sich jeweils radial zur Montageachse 28 vom radial äußeren Rand der deckelseitigen Endscheibe 36 bis zu einem Ringabschnitt 62, welcher die deckelseitige Durchstichöffnung 40 umgibt. Die Strömungskanäle 60 sind umfangsmäßig gleichmäßig auf der deckelseitigen Endscheibe 36 verteilt. Sie sind jeweils an ihrem radial äußeren Ende zum Ringraum 56 hin offen. Die Strömungskanäle 60 sind in ihrer Form und ihrer Dimension identisch. Die Tiefe der Strömungskanäle 60 axial zur Montageachse 28 betrachtet nimmt von radial außen nach innen hin ab. Die Strömungskanäle 60 sind etwa keilförmig. Ihre Böden verlaufen schräg zur äußeren Oberfläche des Ringabschnitts 62 und gehen in eine, dem Filtermedium 34 abgewandte, axial äußere Oberfläche des Ringabschnitts 62 über. Die Breite der Strömungskanäle 60 nimmt in axialer Richtung von ihren Böden bis zu ihren offenen Seiten hin zu. Insgesamt verkleinern sich die Strömungsquerschnitte der Strömungskanäle 60 von radial außen nach innen.

Umfangsmäßig betrachtet zwischen jeweils zwei der Strömungskanäle 60 ist jeweils ein Stützvorsprung 64 angeordnet. Jeweils zwei der Stützvorsprünge 64 begrenzen seitlich jeweils einen der Strömungskanäle 60. Die beiden Stützvorsprünge 64, die jeweils einen der Strömungskanäle 60 seitlich begrenzen, sind Stützelementabschnitte von entsprechenden separaten Stützelementen 74. Jedes der Stützelemente 74 wird seitlich durch einen der Strömungskanäle 60 begrenzt. Die dem Filtermedium 34 abgewandten Oberseiten der Stützvorsprünge 64 befinden sich etwa in einer Ebene mit der axial äußeren Oberfläche des Ringabschnitts 62. Bei eingebautem Filterelement 32 liegen die Oberseiten der Stützvorsprünge 64 an einem ringförmigen Stützsteg 66 an, der koaxial zur Montageachse 28 einstückig an der Innenseite des Gehäusedeckels 16 angeordnet ist. Der radial äußere Rand des Ringabschnitts 62 befindet sich in einem Abstand radial innerhalb des Stützstegs 66. Die Strömungskanäle 60 sind zum Bypassraum 58 hin offen.

Zur Montage des Ölfilters 10 wird zunächst das Mittelrohr 22 mit dem Umgehungsventil 50 ausgestattet. Anschließend wird das Mittelrohr 22 mit seinem den Raststeg 24 aufweisenden Ende auf die Rasthaken 26 des Gehäusedeckels 16 gesteckt. Dann wird das Filterelement 32 mit der deckelseitigen Endscheibe 36 voran soweit auf das Mittelrohr 22 gesteckt, bis die Stützvorsprünge 64 an dem Stützsteg 66 anstoßen.

Der Gehäusedeckel 16 mit dem Filterelement 32 wird mit dem Mittelrohr 22 voran axial zur Montageachse 28 in den Gehäusetopf 14 gesteckt und eingeschraubt. Das Filterelement 32 wird durch das Mittelrohr 22 in radialer Richtung zentriert. Durch Zusammenwirkung der Stützvorsprünge 64 mit dem Stützsteg 66 wird das Filterelement 32 in den Gehäusetopf 14 gedrückt und in axialer Richtung positioniert. Die radial äußeren Ränder der Rücklaufsperrmembran 46 liegen dicht an den entsprechenden Dichtungsflächen am Boden des Filtergehäuses 12 an. Das dem Gehäusedeckel 16 abgewandte Ende des Mittelrohrs 22 liegt dicht am Ölauslass 20 an.

Beim Betrieb der Brennkraftmaschine fließt Motoröl aus der Ölzuleitung des Motorölkreislaufs durch den Öleinlass 18 dem Ölfilter 10 zu. Aufgrund des Öldrucks öffnet die Rücklaufsperrmembran 46, sodass das Öl angedeutet durch Pfeile 68 dem Einlassraum 54 zuströmen kann. Der Einfachheit halber ist in der Figur 1 die Rücklaufsperrmembran 46 lediglich geschlossen gezeigt. Das Öl gelangt aus dem Einlassraum 54 in den Ringraum 56. Von dort aus durchströmt das Öl, angedeutet durch Pfeile 70, das Filtermedium 34 von der Rohseite, radial außen, zur Reinseite, radial innen, und wird dabei filtriert. Das filtrierte Öl durchströmt die Durchflussöffnungen 48 des Mittelrohrs 22 und gelangt in das Mittelrohr 22, also in den Innenraum 44 des Filterelements 32. Es strömt, in der Figur 1 angedeutet durch einen Pfeil 72, im Innenraum 44 im Inneren des Mittelrohrs 22 zum Ölauslass 20 und gelangt von diesem aus in die Ölrückführleitung des Motorölkreislaufs.

Falls das Motoröl beispielsweise beim Starten der kalten Brennkraftmaschine aufgrund einer geringen Temperatur eine entsprechend hohe Viskosität aufweist, kann es zu einer Erhöhung des Differenzdrucks zwischen der Rohseite und der Reinseite kommen. Da der Ringraum 56 über die Strömungskanäle 60 und den Bypassraum 58 mit einem Einlass des Umgehungsventils 50 verbunden ist und ein Auslass des Umgehungsventils 50 mit dem Inneren des Mittelrohrs 22 im Innenraum 44 verbunden ist, liegt dieser Differenzdruck auch zwischen dem Einlass und dem Auslass des Umgehungsventils 50 an. Bei Überschreiten eines beispielsweise durch die Ausgestaltung des Umgehungsventils 50 vorgegebenen Grenz-Differenzdrucks öffnet dieses und gibt die Bypassleitung 52 frei. Das Öl kann nun aus dem Ringraum 56 gleichmäßig über die Strömungskanäle 60, angedeutet durch gestrichelte Pfeile 74, dem Bypassraum 58 zuströmen. Die umfangsmäßig gleichmäßige Verteilung der Strömungskanäle 60 sorgt dafür, dass das Motoröl gleichmäßig aus dem Ringraum 56 in den Bypassraum 58 gelangen kann. Die Verkleinerung des Strömungsquerschnitts der Strömungskanäle 60 von radial außen nach innen bewirkt eine Beruhigung der Strömung. Aus den Bypassraum 58 gelangt das Öl, angedeutet durch gestrichelte Pfeile 76, durch die Durchflussöffnungen 30 zum Einlass des Umgehungsventils 50. Es durchströmt das Umgehungsventil 50 und gelangt so in das Innere des Mittelrohrs 22, also in den Innenraum 44. Von dort aus gelangt das Öl, wie oben bereits beschrieben, über den Ölauslass 20 zurück in den Motorölkreislauf.

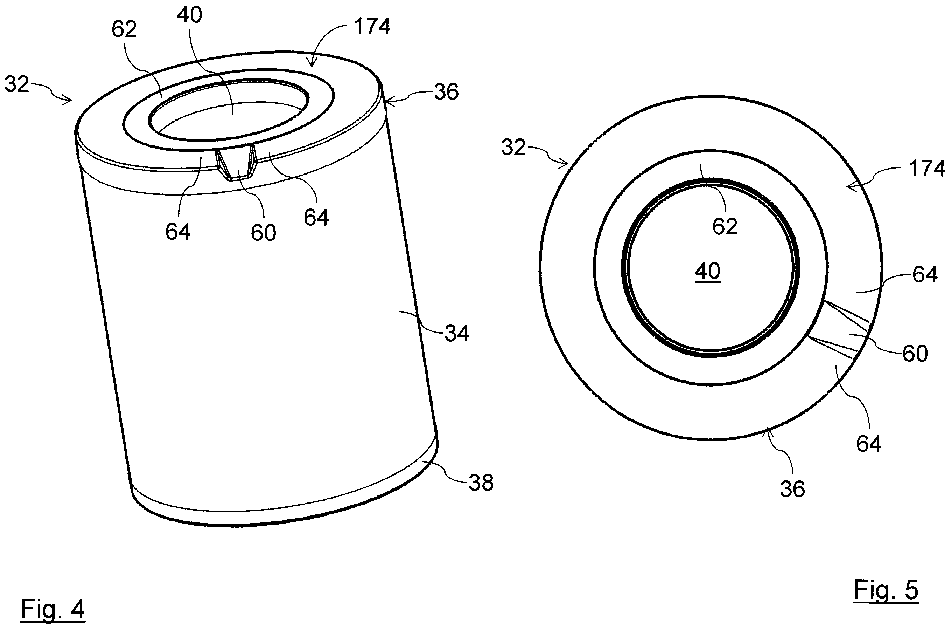

In den Figuren 4 und 5 ist ein zweites Ausführungsbeispiel eines Filterelements 32 gezeigt. Diejenigen Elemente, die zu denen des ersten Ausführungsbeispiels aus den Figuren 1 bis 3 ähnlich sind, sind mit denselben Bezugszeichen versehen. Das zweite Ausführungsbeispiel unterscheidet sich von dem ersten Ausführungsbeispiel dadurch, dass die deckelseitige Endscheibe 36 lediglich einen Strömungskanal 60 aufweist. Der Strömungskanal 60 entspricht in Form und Verlauf im Wesentlichen einem der Strömungskanäle 60 aus dem ersten Ausführungsbeispiel aus den Figuren 1 bis 3. Der Strömungskanal 60 wird beidseitig jeweils durch einen Stützvorsprung 64 begrenzt. Jeder Stützvorsprünge 64 ist ein Stützelementabschnitt eines einzigen Stützelements 174. Das Stützelement 174 verläuft umfangsmäßig in der Art eines offenen Ringes, wobei die Öffnung des Rings den Strömungskanal 60 bildet.

Bei den oben beschriebenen Ausführungsbeispielen eines Ölfilters 10 und eines Filterelements 32 sind unter anderem folgende Modifikationen möglich:
Die Erfindung ist nicht beschränkt auf einen Ölfilter 10 einer Brennkraftmaschine eines Kraftfahrzeugs. Vielmehr kann sie auch bei andersartigen Brennkraftmaschinen, insbesondere Industriemotoren, eingesetzt werden. Die Erfindung ist auch nicht beschränkt auf Brennkraftmaschinen. Sie kann auch bei andersartigen Ölkreisläufen oder ölführenden Systemen eingesetzt werden.

Der Gehäusetopf 14 kann statt aus einer Aluminiumdruckgusslegierung auch aus einem andersartigen Material, beispielsweise einem anderen Metall oder einem Kunststoff, bestehen. Der Gehäusedeckel 16 kann statt aus einem Kunststoff auch aus einem andersartigen Material, beispielsweise einem Metall, sein.

Der Gehäusedeckel 16 kann statt mittels einer Schraubverbindung auch in andersartiger Weise vorzugsweise in axialer Richtung mit einer Dreh- und/oder Steckverbindung, beispielsweise einer Bajonettverbindung, mit dem Gehäusetopf 14 trennbar verbunden sein.

Anstelle des sternförmig gefalteten Filtermediums 34 kann auch ein andersartiges vorzugsweise koaxiales Filtermedium eingesetzt sein.

Die Endscheiben 36 und 38 können statt geklebt auch in andersartiger Weise dicht mit der jeweiligen Stirnseite des Filtermediums 34 verbunden sein. Die Endscheiben 36 und 38 können beispielsweise mit dem Filtermedium 34 verschweißt sein.

Die Endscheiben 36 und 38 können auch aus einem PUR (Polyurethan)-Schaum sein.

Die Endscheiben 36 und 38 können statt flach auch andersförmig, beispielsweise gewölbt, sein.

Die Strömungskanäle 60 können statt nach einem Formverfahren auch nach einem andersartigen Verfahren, beispielsweise nach einem Spritzgussverfahren, in die deckelseitige Endscheibe 36 eingebracht werden. Die Strömungskanäle 60 können auch mittels einem abtragenden Verfahren, beispielsweise einem Fräsverfahren oder einem Ätzverfahren, realisiert sein.

Statt identischer Strömungskanäle 60 können auch unterschiedliche Strömungskanäle vorgesehen sein. Der Strömungsquerschnitt der Strömungskanäle 60 kann statt nach radial innen hin abnehmend auch über die gesamte radiale Ausdehnung hin konstant sein. Die Strömungskanäle 60 können statt in radialer Richtung auch andersartig, beispielsweise geschwungen, von radial außen nach innen verlaufen.

Es können auch mehr oder weniger als die in den Figuren dargestellten und beschriebenen Strömungskanäle 60 vorgesehen sein.

Die Stützvorsprünge 64 und die Strömungskanäle 60 können auch Teile eines Adapterelements sein, welches zwischen einer entsprechenden deckelseitigen Endscheibe und der Innenseite des Gehäusedeckels 16 angeordnet werden kann. Das Adapterelement kann mit der deckelseitigen Endscheibe oder dem Gehäusedeckel 16 verbunden sein.

Statt von radial außen nach innen kann das Filtermedium 34 auch von radial innen nach außen durchströmbar sein. In diesem Fall können die Funktionen des Öleinlasses 18 und des Ölauslasses 20, des Umgehungsventils 50 und der Rücklaufsperrmembran 46 entsprechend angepasst werden.

Anstelle der Rücklaufsperrmembran 56 kann auch eine andersartige Rücklaufsperre für das Motoröl vorgesehen sein. Auf die Rücklaufsperrmembran 56 kann auch verzichtet werden. Die Rücklaufsperrmembran 46 kann statt am Filterelement 32 auch am Filtergehäuse 12 angeordnet sein.

## Patentansprüche

1. Ölfilterelement (32) eines Ölfilters (10) einer Brennkraftmaschine insbesondere eines Kraftfahrzeugs, welches austauschbar in einem Filtergehäuse (12) anordenbar ist, und das ein Filtermedium (32) umfasst, das einen Innenraum (44) des Ölfilterelements (32) umfangsmäßig geschlossen umgibt und das wenigstens an einer Stirnseite mit einem Endkörper (36) dicht verbunden ist, **dadurch gekennzeichnet, dass** der Endkörper (36) eine Bypassöffnung (40) zu einem Innenraum (44) des Ölfilterelements (32) aufweist, und dass am Endkörper (36) eine Mehrzahl von Stützelementabschnitten (64) angeordnet ist, die zur Abstützung gegen eine Innenseite eines Gehäusedeckels (16) ausgebildet sind und in Umfangsrichtung benachbarte Stützelementabschnitte (64) wenigstens einen Strömungskanal (60) einer Bypassleitung (52) begrenzen.

2. Ölfilter (10) einer Brennkraftmaschine insbesondere eines Kraftfahrzeugs mit einem Filtergehäuse (12), welches einen Gehäusetopf (14), einen mit diesem trennbar verbundenen Gehäusedeckel (16), wenigstens einen Öleinlass (18) und wenigstens einen Ölauslass (20) aufweist und in dem ein austauschbares Ölfilterelement (32) nach Anspruch 1 so angeordnet ist, dass es den wenigstens einen Öleinlass (18) von dem wenigstens einen Ölauslass (20) trennt, und die Mehrzahl von Stützelementabschnitten (64) zwischen dem Filtermedium (34) und einer Innenseite des Gehäusedeckels (16) angeordnet ist, **dadurch gekennzeichnet, dass** die Bypassleitung (52) mit einem Umgehungsventil (50) zur Umgehung des Ölfilterelements (32) einen radial äußeren Ringraum (56), der zwischen der radial äußeren Umfangsseite des Filtermediums (34) und einer radial inneren Umfangsseite des Filtergehäuses (12) angeordnet ist, über die Bypassöffnung (40) in dem deckelseitigen Endkörper (36) mit dem Innenraum (44) des Ölfilterelements (32) verbindet.

3. Ölfilter nach Anspruch 2, **dadurch gekennzeichnet, dass** die Stützelementabschnitte (64) sich bezüglich dem Filtermedium (34) von radial außen von dem radial äußeren Ringraum (56) nach radial innen erstrecken.

4. Ölfilter nach Anspruch 2 oder 3, **dadurch gekennzeichnet, dass** der wenigstens eine Strömungskanal (60) in der dem Filtermedium (34) abgewandten Außenseite des Endkörpers (36) angeordnet ist.

5. Ölfilter nach einem der vorigen Ansprüche 2 bis 4, **dadurch gekennzeichnet, dass** der wenigstens eine Strömungskanal (60) sich von radial außen von dem radial äußeren Ringraum (56), mit diesem verbunden, nach radial innen erstreckt.

6. Ölfilter nach einem der vorigen Ansprüche 2 bis 5, **dadurch gekennzeichnet, dass** der Endkörper eine geschäumte Folienendscheibe (36) ist und der wenigstens eine Strömungskanal eine Nut (60) in der dem Filtermedium (34) abgewandten Außenseite der Folienendscheibe (36) ist und die Stützelementabschnitte Vorsprünge (64) der Folienendscheibe (36) neben der Nut (60) sind.

7. Ölfilter nach einem der vorigen Ansprüche 2 bis 6, **dadurch gekennzeichnet, dass** eine Mehrzahl von Strömungskanälen (60) umfangsmäßig vorzugsweise gleichmäßig an der dem Filtermedium (34) abgewandten Außenseite des Endkörpers (36) verteilt ist.

8. Ölfilter nach einem der vorigen Ansprüche 2 bis 7, **dadurch gekennzeichnet, dass** sich der wenigstens eine Strömungskanal (60) in radialer Richtung erstreckt.

9. Ölfilter nach einem der vorigen Ansprüche 2 bis 8, **dadurch gekennzeichnet, dass** ein Strömungsquerschnitt, insbesondere eine axiale Tiefe, des wenigstens einen Strömungskanals (60) nach radial innen hin abnimmt.

10. Ölfilter nach einem der vorigen Ansprüche 2 bis 9, **dadurch gekennzeichnet, dass** der Endkörper (36) und die Innenseite des Gehäusedeckels (16) einen stirnseitigen Bypassraum (58) begrenzen, der mit dem wenigstens einen Strömungskanal (60) und der Bypassöffnung (40) verbunden ist.

11. Ölfilter nach einem der vorigen Ansprüche 2 bis 10, **dadurch gekennzeichnet, dass** an der dem Endkörper (36) zugewandten Innenseite des Gehäusedeckels (16) wenigstens ein Gegenstützkörper, insbesondere ein umlaufender Steg (66), angeordnet ist, an dem sich die Stützelementabschnitte (64) des Endkörpers (36) abstützen können.

12. Ölfilter nach einem der vorigen Ansprüche 2 bis 11, **dadurch gekennzeichnet, dass** das Umgehungsventil (50) im Innenraum (44) des Ölfilterelements (32) angeordnet ist.

## Claims

1. Oil filter element (32) of an oil filter (10) of an internal combustion engine in particular of a motor vehicle which can be disposed replaceably in a filter housing (12), and which comprises a filter medium (32) which encloses an interior space (44) of the oil filter element (32) circumferentially in a closed manner and which is sealingly connected at least on one front side with an end body (36), **characterized in that** the end body (36) features a bypass opening (40) towards an interior space (44) of the oil filter element (32), and that a plurality of support member sections (64) are disposed at the end body (36) which are designed to serve as a support against an interior side of a housing cover (16) and that in circumferential direction adjacent support member sections (64) define at least one flow channel (60) of a bypass line (52).

2. Oil filter (10) of an internal combustion engine in particular of a motor vehicle with a filter housing (12) which features a housing pot (14), a housing cover (16) detachably connected therewith, at least one oil inlet (18) and at least one oil outlet (20) and in which is disposed a replaceable oil filter element (32) according to claim 1 in such a way that it separates the at least one oil inlet (18) from the at least one oil outlet (20), and the plurality of support member sections (64) being disposed between the filter medium (34) and an interior side of the housing cover (16), **characterized in that** the bypass line (52) with a bypass valve (50) for bypassing the oil filter element (32) connects a radially outer annular space (56), which is disposed between the radially outer circumferential side of the filter medium (34) and a radially inner circumferential side of the filter housing (12), via the bypass opening (40) in the cover-sided end body (36) with the interior space (44) of the oil filter element (32).

3. Oil filter according to claim 2, **characterized in that** the support member sections (64) extend relative to the filter medium (34) from radially outwards from the radially outer annular space (56) to radially inwards.

4. Oil filter according to claim 2 or 3, **characterized in that** the at least one flow channel (60) is disposed in the exterior side of the end body (36) facing away from the filter medium (34).

5. Oil filter according to one of the above claims 2 to 4, **characterized in that** the at least one flow channel (60) extends from radially outwards from the radially outer annular space (56), connected therewith, to radially inwards.

6. Oil filter according to one of the above claims 2 to 5, **characterized in that** the end body is a foamed foil end plate (36) and that the at least one flow channel is a groove (60) in the exterior side of the foil end plate (36) facing away from the filter medium (34) and that the support member sections are protrusions (64) of the foil end plate (36) beside the groove (60).

7. Oil filter according to one of the above claims 2 to 6, **characterized in that** a plurality of flow channels (60) is distributed circumferentially preferably uniformly at the exterior side of the end body (36) facing away from the filter medium (34)

8. Oil filter according to one of the above claims 2 to 7, **characterized in that** the at least one flow channel (60) extends in radial direction.

9. Oil filter according to one of the above claims 2 to 8, **characterized in that** a flow cross-section, in particular an axial depth, of the at least one flow channel (60) decreases towards radially inwards.

10. Oil filter according to one of the above claims 2 to 9, **characterized in that** the end body (36) and the interior side of the housing cover (16) define a frontal bypass chamber (58) which is connected with the at least one flow channel (60) and the bypass opening (40).

11. Oil filter according to one of the above claims 2 to 10, **characterized in that** at the interior side of the housing cover (16) facing the end body (36) at least one counter-support element, in particular a circumferential web (66), is disposed against which the support member sections (64) of the end body (36) can rest.

12. Oil filter according to one of the above claims 2 to 11, **characterized in that** the bypass valve (50) is disposed in the interior space (44) of the oil filter element (32).

## Revendications

1. Élément de filtre à huile (32) d'un filtre à huile (10) d'un moteur à combustion interne, en particulier d'un véhicule automobile, qui peut être disposé dans un boîtier de filtre (12) de manière à pouvoir être remplacé, et qui comprend un milieu filtrant (32) qui encercle de manière fermée le pourtour d'un espace intérieur (44) de l'élément de filtre à huile (32) et qui est relié de manière étanche, au moins par une face frontale, à un élément d'extrémité (36), **caractérisé en ce que** l'élément d'extrémité (36) comporte une ouverture de dérivation (40) vers un espace intérieur (44) de l'élément de filtre à huile (32), et **en ce que** plusieurs sections d'éléments d'appui (64) faisant office d'appui contre une face intérieur du couvercle de boîtier (16) sont disposées sur l'élément d'extrémité (36) et **en ce que** des sections d'éléments d'appui (64) adjacentes en sens circonférentiel limitent au moins un conduit d'écoulement (60) d'une conduite de dérivation (52).

2. Filtre à huile (10) d'un moteur à combustion interne, en particulier d'un véhicule automobile, avec un boîtier de filtre (12) qui comporte un pot de boîtier (14), un couvercle de boîtier (16) relié de manière séparable à ce pot de boîtier, au moins une entrée d'huile (18) et au moins une sortie d'huile (20), et dans lequel est disposé un élément de filtre à huile (32) échangeable selon la revendication 1 de telle manière qu'il sépare l'entrée d'huile (18), au moins au nombre d'une, de la sortie d'huile (20), au moins au nombre d'une, et la plupart des sections d'éléments d'appui (64) étant disposées entre le milieu filtrant (34) et une face intérieure du couvercle de boîtier (16), **caractérisé en ce que** la conduite de dérivation (52) avec une soupape de dérivation (50) destinée à dériver l'élément de filtre à huile (32) relie un logement annulaire (56) radialement extérieur, lequel est situé entre la face circonférentielle radialement extérieure du milieu filtrant (34) et une face circonférentielle radialement intérieure du boîtier de filtre (12), par l'intermédiaire de l'ouverture de dérivation (40) située dans l'élément d'extrémité (36) côté couvercle, à l'espace intérieur (44) de l'élément de filtre à huile (32).

3. Filtre à huile selon la revendication 2, **caractérisé en ce que** les sections d'éléments d'appui (64) s'étendent, par rapport au milieu filtrant (34), de l'extérieur en sens radial du logement annulaire (56) radialement extérieur vers l'intérieur en sens radial.

4. Filtre à huile selon la revendication 2 ou 3, **caractérisé en ce que** le conduit d'écoulement (60), au moins au nombre d'un, est disposé dans la face extérieure opposée au milieu filtrant (34) de l'élément d'extrémité (36).

5. Filtre à huile selon l'une des revendications 2 à 4 précédentes, **caractérisé en ce que** le conduit d'écoulement (60), au moins au nombre d'un, s'étend de l'extérieur en sens radial du logement annulaire (56) radialement extérieur, en étant relié à ce dernier, vers l'intérieur en sens radial.

6. Filtre à huile selon l'une des revendications 2 à 5 précédentes, **caractérisé en ce que** l'élément d'extrémité est un disque d'extrémité en film expansé (36) et que le conduit d'écoulement, au moins au nombre d'un, est une rainure (60) dans la face extérieure opposée au milieu filtrant (34) du disque d'extrémité en film (36) et que les sections d'éléments d'appui sont des saillies (64) du disque d'extrémité en film (36) à côté de la rainure (60).

7. Filtre à huile selon l'une des revendications 2 à 6 précédentes, **caractérisé en ce que** plusieurs conduits d'écoulement (60) sont répartis sur la circonférence, de préférence de manière homogène, sur la face extérieure opposée au milieu filtrant (34) de l'élément d'extrémité (36).

8. Filtre à huile selon l'une des revendications 2 à 7 précédentes, **caractérisé en ce que** le conduit d'écoulement (60), au moins au nombre d'un, s'étend en sens radial.

9. Filtre à huile selon l'une des revendications 2 à 8 précédentes, **caractérisé en ce qu'**une section de flux, en particulier une profondeur axiale, du conduit d'écoulement (60), au moins au nombre d'un, rétrécit vers l'intérieur en sens radial.

10. Filtre à huile selon l'une des revendications 2 à 9 précédentes, **caractérisé en ce que** l'élément d'extrémité (36) et la face intérieure du couvercle de boîtier (16) limitent un espace de dérivation (58) frontal qui est relié au conduit d'écoulement (60), au moins au nombre d'un, et à l'ouverture de dérivation (40).

11. Filtre à huile selon l'une des revendications 2 à 10 précédentes, **caractérisé en ce que** sur la face intérieure du couvercle de boîtier (16) dirigée vers l'élément d'extrémité (36) est disposé au moins un élément de contre-appui, en particulier une nervure (66) circulaire, sur lequel les sections d'éléments d'appui (64) de l'élément d'extrémité (36) peuvent s'appuyer.

12. Filtre à huile selon l'une des revendications 2 à 11 précédentes, **caractérisé en ce que** la soupape de dérivation (50) est disposée dans l'espace intérieur (44) de l'élément de filtre à huile (32).
